# EUROPÄISCHE PATENTSCHRIFT

(11) **EP 0 326 590 B1**
(45) Veröffentlichungstag und Bekanntmachung des Hinweises auf die Patenterteilung: **27.10.1993**
(21) Anmeldenummer: 88905716.2
(22) Anmeldetag: 20.07.1988
(51) Int. Cl.: B23K 3/06

(54) **VERFAHREN ZUM DOSIEREN DER LOTMENGE BEI EINER LÖTVORRICHTUNG**
PROCESS FOR DOSING THE QUANTITY OF SOLDER IN A SOLDERING DEVICE
PROCEDE DE DOSAGE DE LA QUANTITE DE SOUDURE DANS UN DISPOSITIF DE SOUDAGE

(30) Priorität: 17.08.1987 DE 3727343
(43) Veröffentlichungstag der Anmeldung: 09.08.1989
(73) Patentinhaber: ROBERT BOSCH GMBH, 70442 Stuttgart (DE)
(72) Erfinder: OHLE, Eckhard, D-7000 Stuttgart 40 (DE); RESCHNAR, Wilfried, D-7129 Schozach (DE)
(86) Internationale Anmeldenummer: DE8800450
(87) Internationale Veröffentlichungsnummer: WO8901379

(56) Entgegenhaltungen:
- DE-A- 3 312 421
- DE-A- 3 404 945
- DE-U- 8 032 858
- US-A- 3 830 420
- Patent Abstracts of Japan, vol. 9, No. 191 (M-402)(1914) 7 August 1985 & JP-A-6056481 (TOSHIBA K.K.) " April 1985

## Beschreibung

Die Erfindung geht aus von einem Verfahren zum Dosieren der Lotmenge mit automatischer Heranführung einer bestimmten, abzuschmelzenden Lotdrahtlänge bei einer Lötvorrichtung nach dem Gattungsbegriff des Anspruch 1. Durch die DE-A1-24 27 390 ist bereits eine Lötvorrichtung mit automatischer Heranführung einer bestimmten, abzuschmelzenden Lotdrahtlänge an die Lötstelle bei jedem Lötvorgang bekannt geworden. Im einzelnen hat diese Vorrichtung einen Schlitten, der sich mittels eines Antriebsmotors zur Lötstelle hin und von dieser fortbewegen läßt. Am Schlitten ist eine elektromotorisch gesteuerte Drahtvorschubeinrichtung angeordnet. Ein Steuersystem mit Gegenstands-Fühlschaltern für den Antriebsmotor des Schlittens sorgt dafür, daß der Schlitten in seine Lötstellung gelangt, anschließend eine bestimmte, abzuschmelzende Lotdrahtlänge an die erhitzte Lötstelle herangeführt wird und nach erfolgter Lötung der Lotdraht zurückgezogen und der Schlitten zurückgeführt wird. Damit ist gewährleistet, daß die Vorrichtung in einer automatisch gesteuerten Taktfolge arbeitet, wobei der Lötstelle bei jedem Lötvorgang stets die gleiche Lotdrahtmenge zugeführt wird. Die Beschaffenheit des verwendeten Lotdrahts, d.h. dessen Dicke, Materialzusammensetzung, Schmelzfähigkeit und dergleichen werden bei der bekannten Vorrichtung nicht berücksichtigt.

Ferner ist durch die JP-60 56 481 eine automatische Drahtrückzugsvorrichtung bekannt geworden, die mittels eines Drucksensors die Widerstandskraft des Lotdrahtes gegen die Lötstelle erfaßt und bei großen auftretenden Kräften den Draht zurückzieht.

### Vorteile der Erfindung

Das erfindungsgemäße Verfahren mit den kennzeichnenden Merkmalen des Anspruchs 1 hat den Vorteil, daß ein Höchstmaß an gleichbleibender Lötqualität auf überraschend einfache Weise exakt eingehalten werden kann, auch wenn sich einer oder mehrere Lötparameter ändern oder Störeinflüsse auftreten. Zu solchen Störfaktoren gehören beispielsweise Temperaturänderungen der Wärmequelle, die auf Stromschwankungen, Verschmutzung oder bei Verwendung von Gasbrennern auf Durchflußänderungen der Gasmenge zurückzuführen sind. Zu den Lötparametern, die sich ändern können, zählen insbesondere die Große, das Material und die Masse der miteinander zu verlötenden Teile, deren Anfangstemperatur sowie die Zusammensetzung und Dicke des Lotdrahtes. Alle diese Komponenten führen dazu, daß sich die Lötzeit, d.h. diejenige Zeitspanne ändert, die eine vorgegebene Lotdrahtmenge braucht, um nach Aufsetzen auf die Lötstelle abzuscbmelzen. Das vorgeschlagene Verfahren hingegen gleicht Erwärmungsfehler durch Regulierung der Vorschubkraft oder der Vorschubgeschwindigkeit des Lotdrahts selbsttätig aus und vermeidet auf diese Weise außerdem ein Abknicken des Lotdrahtendes beim Aufsetzen auf die Lötstelle. Diese kraftsensible Lotdraht-Abschmelzregelung ist besonders wichtig bei Verwendung sehr weicher und/oder sehr dünner Lotdrähte für Feinlötungen. Die geschilderten Eigenschaften machen eine nach dem erfindungsgemäßen Verfahren ausgebildete Lötvorrichtung besonders geeignet zum Einsatz in automatischen Lötstationen, bei denen die Vorrichtung an einem programmierbaren Handhabungsgerät angebracht ist. Zu erwähnen ist außerdem, daß das vorgeschlagene Verfahren keine zusätzlichen Fühler zum Erfassen der Temperatur an der Lötstelle benötigt. Dies ermöglicht den Bau besonders zuverlässiger und robuster Lötautomaten.

Durch die in den Unteransprüchen vorgeschlagenen Maßnahmen sind vorteilhafte Weiterbildungen und Verbesserungen des im Anspruch 1 angegebenen Verfahrens möglich. Außerdem sind vorteilhafte Ausführungsformen von Vorrichtungen zur Durchführung des Verfahrens angegeben. Eine besonders einfache und genaue Kraftregelung läßt sich dadurch erreichen, daß die Größe der am Lotdrahtende jeweils anstehenden Andruckkraft in proportionale elektrische Signale umgewandelt wird, die als Istwert einem die Drehzahl eines Elektromotors für den Lotdrahtvorschub bestimmenden Regelkreis zugeführt werden. Um sowohl beim Zustellen als auch beim Aufsetzen und Abschmelzen des Lotdrahtes eine möglichst feinfühlige Regelung zu erhalten ist weiter vorgesehen, daß die Gewichtung des von der am Lotdrahtende anstehenden Andruckkraft abgeleiteten elektrischen Signals veränderbar ist. Eine weitere Verbesserung besteht darin, daß der Gewichtsanteil der die Andruckkraft des Lotdrahtes mitbestimmenden Teile der Lötvorrichtung vor jedem Lötzyklus durch Nullabgleich eliminiert wird. Die Größe des verbleibenden Meßsignals hängt dadurch nur noch von der am Lotdrahtende anstehenden Andruckkraft ab.

### Zeichnung

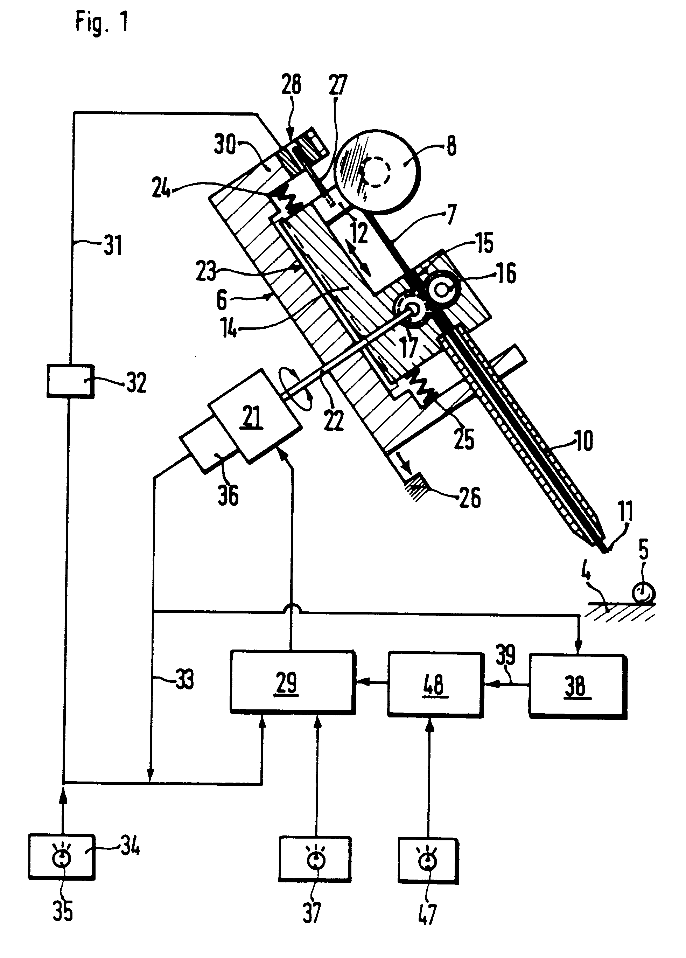

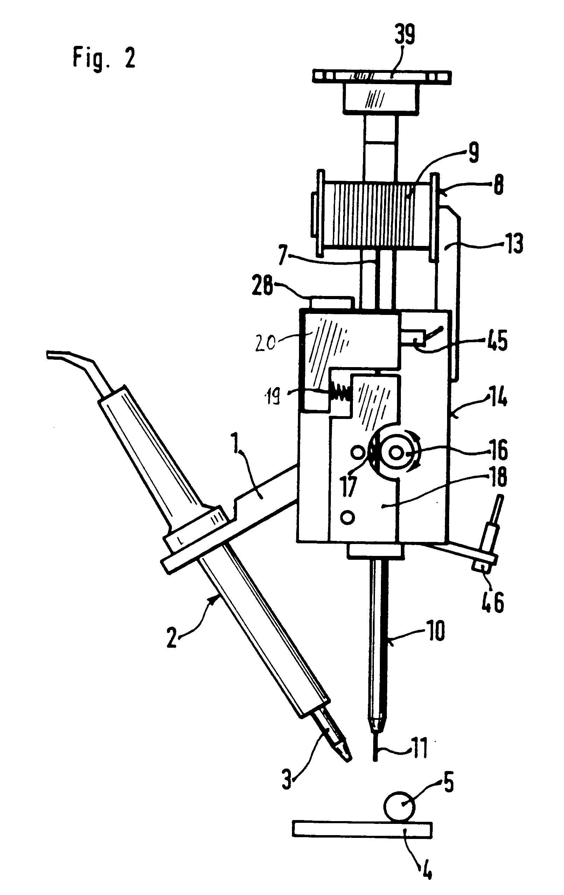

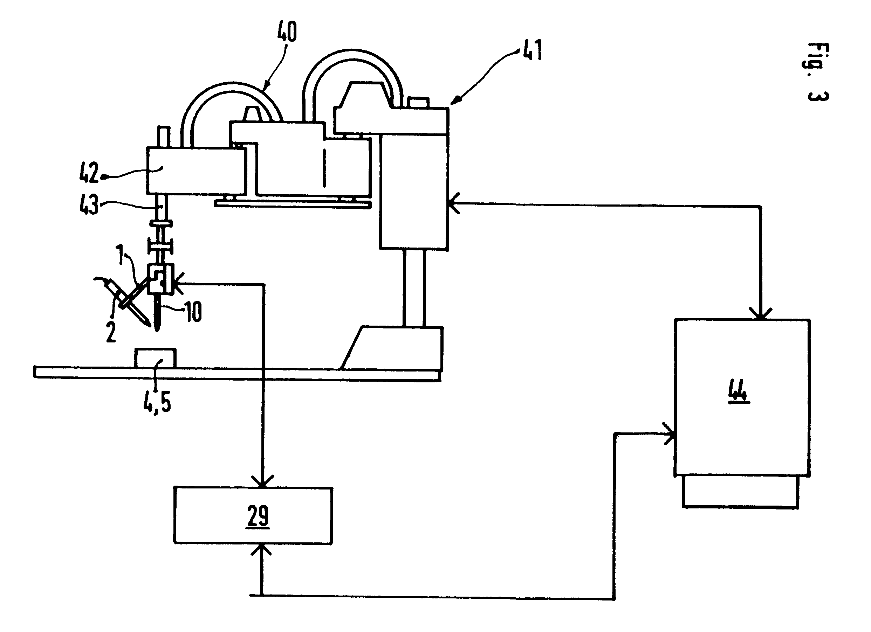

Ausführungsbeispiele von Vorrichtungen zur Durchführung des erfindungsgemäßen Verfahrens sind in der Zeichnung dargestellt und in der nachfolgenden Beschreibung näher erläutert. Es zeigen Figur 1 ein erstes, schematisch dargestelltes Ausführungsbeispiel in Verbindung mit einem Blockschaltbild, Figur 2 eine an ein Handhabungsgerät anbringbare, modifizierte Ausführungsform der Lötvorrichtung, Figur 3 ein mit einer speicherprogrammierbaren Steuerung ausgerüstetes Handhabungsgerät mit der Lötvorrichtung gemäß Figur 2.

### Beschreibung des Ausführungsbeispiels

Die in den Figuren dargestellte Lötvorrichtung hat eine Heiz- oder Wärmequelle in Form eines in einem Halter 1 auswechselbar angeordneten Lötkolbens 2. Anstelle eines solchen Lötkolbens könnte auch eine andere Wärmequelle, beispielsweise ein Gasbrenner oder ein Laser, Verwendung finden. Die Lötspitze 3 des Lötkolbens 2 ist auf einen an ein Werkstück 4 anzulötenden Draht 5 ausgerichtet. Die Teile 4, 5 werden nachstehend als Lötstelle bezeichnet.

Der Halter 1 ist an einem nachstehend näher beschriebenen Träger 6 (Figur 1) schwenkbar gelagert und zwischen der in den Figuren 2 und 3 dargestellten Lötposition und einer Reinigungsposition für die Lötspitze 3 verstellbar. Der Lotdraht 7 wird von einem auf einer Spule 8 befindlichen Wickel 9 abgespult und durchläuft ein Führungsrohr 10, das derart angeordnet ist, daß das aus dem Rohr 10 herausragende Ende 11 des Lotdrahtes 7 auf die Lötstelle 4, 5 ausgerichtet ist. Die Spule 8 ist an einem Arm 12 (Figur 1) bzw. 13 (Figur 2) eines Schlittens 14 gelagert. An dem zur Lötstelle 4, 5 weisenden Ende des Schlittens 14 ist das Lotdrahtführungsrohr 10 befestigt. Zwischen Wickel 9 und Führungsrohr 10 ist im Bereich einer im Schlitten 14 ausgebildeten Bohrung 15 eine Lotdraht-Vorschubeinrichtung angeordnet. Diese hat zwei vorzugsweise geriffelte Reibrollen 16, 17, zwischen denen der Lotdraht 7 hindurchgeführt ist. Die Rolle 16 ist am Schlitten 14 gelagert. Die Drehachse der Reibrolle 17 sitzt, wie aus Figur 1 ersichtlich, auf einer am Schlitten 14 schwenkbar gelagerten Platte 18. Eine Feder 19, die sich an einem Teil 20 des Schlittens 14 und an der Platte 18 abstützt, drückt die Reibrolle 17 in Richtung der Reibrolle 16, wodurch der Lotdraht 7 reibungsschlüssig zwischen die beiden Rollen eingespannt wird. Zum Vorschub des Lotdrahtes 7 dient ein Elektromotor 21, dessen Drehrichtung umkehrbar ist. Die Antriebskraft des Motors wird über eine Welle 22 auf die Reibrolle 17 übertragen. Der Motor 21 ist ebenso wie der auf der Spule 8 befindliche Lotdrahtwickel 9 am Schlitten 14 angeordnet.

Der Schlitten 14 ist in einer Gleitführung 23, beispielsweise einer Schwalbenschwanzführung, in Richtung der Lötstelle 4, 5 beweglich am Träger 6 angeordnet. Diese Führung nimmt sämtliche Kräfte auf, die nicht in Richtung des Lotdrahtvorschubs auftreten. Der Schlitten 14 wird durch zwei einander entgegenwirkende Druckfedern 24, 25, die sich an je einer Stirnfläche des Schlittens und am Träger 6 abstützen, in der dargestellten Ausgangslage bezüglich des Trägers 6 gehalten. Letzterer ist von der in Figur 1 dargestellten Ausgangslage in RIchtung auf die Lötstelle 4, 5 bis zum Erreichen einer durch einen gerätefesten Anschlag 26 vorgegebenen Lötposition beweglich. Das Vorschieben und Zurückziehen des Trägers 6 geschieht durch einen nicht dargestellten, vorzugsweise pneumatisch wirkenden Kraftantrieb. Anstelle des beweglichen Trägers 6 könnte auch ein gerätefest angeordneter Träger verwendet werden und statt dessen ein Träger der Lötstelle 4, 5 zwischen einer Ausgangslage und einer Lötposition beweglich angeordnet sein.

Wie aus Figur 1 ersichtlich, ist dem Schlitten 14 der bewegliche Teil 27 eines elektrischen Meßwertaufnehmers 28 zugeordnet, welcher auf Relativbewegungen des Schlittens 14 bezüglich des Trägers 6 anspricht und aus Größe des Bewegungswegs des Schlittens und der Steifigkeit der beiden Federn 24 und 25 ein kraftproportionales Signal erzeugt, das als Istwert einem Drehzahlregelkreis 29 des Elektromotors 21 zugeführt wird. Als Meßwertaufnehmer kann beispielsweise ein induktives System verwendet werden.

Das kraftproportionale Signal wird vor Durchführung eines Lötzyklusdurch die in der Leitung 31 befindliche Schaltung 32 elektronisch genullt. Dadurch werden Einflüsse von Masse und Schräglage der Vorschubeinheit sowie des Gewichtes des Lotdrahtwickels eliminiert.

Solche Nullungsschaltungen sind an sich bekannt und brauchen daher an dieser Stelle nicht näher erläutert zu werden. Die Größe des verbleibenden, dem Regelkreis 29 des Elektromotors 21 zugeführten Signals hängt somit nur noch von der Größe einer auf das Lotdrahtende 11 entgegen dessen Vorschubrichtung ausgeübten Kraft ab.

An die Leitung 33 ist ferner eine auf unterschiedliche Werte einstellbare Gewichtungsschaltung 34 für das vom Meßwertaufnehmer 28 erzeugte kraftabhängige Signal angeschlossen. Abhängig vom Material und der Dicke des verwendeten Lotdrahtes kann beispielsweise die Größe der Signalspannung mittels eines Stellgliedes 35 der Schaltung 34 verändert werden. Je empfindlicher der Lotdraht 7, desto größer die Gewichtung des Signals und umgekehrt.

Auf der Antriebswelle 22 des Motors 21 sitzt ein Tachogenerator 36 als drehzahlabhängiger Signalgeber. Das von ihm gelieferte, der Größe der Drehzahl proportionale Signal wird über eine Leitung 33 in die Leitung 31 eingespeist. Der Istwert des dem Drehzahlregelkreis 29 des Motors 21 zugeführten elektrischen Signals ist E = F K + V, wobei F die Größe des vom Meßwertaufnehmer 28 gelieferten, kraftabhängigen Signals nach der Nullung, K dessen Gewichtung und V die Größe des drehzahlabhängigen Signals ist. Im Regelkreis 29 wird der Istwert mit einem Sollwert verglichen und danach die Drehzahl des Motors 21 geregelt. Die Größe des Sollwerts kann mittels eines Stellglieds 37 eingestellt werden. Zusätzlich führt die Leitung 33 zu einem wegorientierten Lotmengenmeßkreis 38, in dem das Tachogeneratorsignal aufsummiert wird. Das Signal am Ausgang 39 des Meßkreises 38 wird mit dem Sollwert "Lotmenge", welches am Stellglied 47 einstellbar ist, im Vergleicher 48 abgefragt. Bei Erreichen des Sollwertes schaltet der Vergleicher 48 den Motor 21 über den Regler 29 ab.

Die Arbeitsweise der Vorrichtung unter Bezugnahme auf Figur 1 ist wie folgt:
Nach dem Auslösen eines Lötzyklus wird zunächst das vom Meßwertaufnehmer 28 kommende Signal in 32 genullt und der Träger 6 durch motorische Kraft in seine durch den Anschlag 26 bestimmte Lötposition überführt. Anschließend wird über den Regelkreis 29 der Elektromotor 21 zum Vorwärtstransport des Lotdrahtes 7 mittels des Reibrollen 16, 17 eingeschaltet. Der Schlitten 14 behält dabei seine durch die Federn 24, 25 bestimmte Ausgangsstellung am Träger 6 unverändert bei, da auf das Lotdrahtende 11 zunächst keine Gegenkraft einwirkt. Das vom Meßwertaufnehmer 28 gelieferte, um das jeweilige Schlittengewicht bereinigte, Signal bleibt demzufolge konstant und ist vorzugsweise Null. Am Istwerteingang des Regelkreises 29 steht daher zunächst nur das vom Tachogenerator 36 gelieferte Signal. Der Lotdraht 7 wird mit konstanter Geschwindigkeit vorgeschoben, bis das Lotdrahtende 11 auf die Lötstelle 4, 5 auftrifft. Ist die Lötstelle noch kalt oder von der Heizquelle nur mäßig erwärmt, so entsteht beim Aufsetzen des Lotdrahtendes 11 auf die Lötstelle 4, 5 eine Gegenkraft, welch durche die Reibrollen 16, 17 auf den Schlitten 14 übertragen wird und diesen gegen die Kraft der Feder 24 um einen bestimmten Betrag nach oben schiebt. Diese Bewegung wird vom Meßwertaufnehmer 28 in ein Signal umgesetzt, das zu der auf dem Lotdraht 7 ausgeübten Vorschubkraft proportional ist. Demzufolge liefert der Meßwertaufnehmer beim Auftreffen des Lotdrahtendes auf die Lötstelle 4, 5 ein schlagartig ansteigendes Istwertsignal über die Leitung 31. Die Geschwindigkeit des Motors 21 sinkt auf Null, oder wird sogar negativ wobei unterstellt wird, daß das vom Meßwertaufnehmer 28 gelieferte, gewichtete Signal gleich oder größer ist als das dem Regelkreis jeweils aufgeschaltete Sollwertsignal.

Der Anstieg des Meßsignales aus 28 beim Auftreffen des Lotdrahtendes 11 auf die Lötstelle 4, 5 kann dazu benutzt werden, um den Meßkreis 38 für die Lotmenge zu aktivieren, welche mit Hilfe des Vergleichers 48 den Motor abschaltet, nachdem die Lötstelle erhitzt und eine vorgegebene Länge des Lotdrahtes 7 abgeschmolzen ist.

Mit dem Ansteigen der Temperatur an der Lötstelle 4, 5 wird das dort befindliche Lot zunächst weich und dann schmelzflüssig. Die vom Lotdrahtende 11 ausgeübte Gegenkraft nimmt demzufolge stark ab und die in der Feder 24 gespeicherte Energie stellt den Schlitten 14 wieder in seine Ausgangsstellung zurück.

Die Rückkehr des Schlittens 14 in seine Ausgangsstellung hat zur Folge, daß das vom Meßwertaufnehmer 28 gelieferte Signal gegen Null geht. Die daraus resultierende Verstimmung des Regelkreises 29 bringt den Motor 21 erneut zum Anlaufen, welcher den Lotdraht 7 solange vorschiebt, bis die am Stellglied 47 vorgewählte Lotmenge erreicht ist. Hierbei ist vorausgesetzt, daß die Lötstelle 4, 5 so stark erhitzt ist, daß der Lotdraht abschmilzt und seinem Vorschub keinen eine Verschiebung des Schlittens 14 gegen die Kraft der Feder 24 bewirkenden Widerstand entgegensetzt.

Ist die Lötstelle 4, 5 schon vor Beginn des Lotdrahttransportes stark erhitzt, so kann sich beim Aufsetzen des Lotdrahtendes 11 auf die Lötstelle 4, 5 keine Kraft mehr aufbauen. Ohne besondere Maßnahmen würde das Vorschubsystem den Draht 7 geschwindigkeitsgeregelt immer weiter zustellen, da der Meßkreis 38 keinen Aktivierungsimpuls erhält. Um in solchen Fällen Abhilfe zu schaffen, kann der Meßkreis 38 bereits beim Einschalten des Motors 21 aktiviert werden. Das Aktivierungssignal für den Kreis 38 wird zweckmäßigerweise zusammen mit dem Einschaltsignal für den Motor 21 vom Regelkreis 29 geliefert.

Entsteht beim Aufsetzen des Lotdrahtendes 11 auf die Lötstelle 4, 5 eine vom Meßwertaufnehmer 28 registrierte Andruckkraft, so erreicht das Meßglied 38 durch die daraus resultierende Änderung der Signalfolge des Tachogenerators 36 den am Stellglied 47 vorgewählten Sollwert Lotmenge entsprechend später. Dies bedeutet, daß auch bei schlechter Wärmeeinbringung stets die für den Lötprozeß erforderliche Erwärmung stattgefunden hat.

Die Lötvorrichtung eignet sich aufgrund ihrer vorstehend geschilderten Eigenschaften insbesondere auch zur Verwendung in mit Handhabungsgeräten bestückten automatischen Lötstationen. Hierzu ist der Träger 6 der Lötvorrichtung mit einer Adapterplatte 39 (Figur 2) zum Anbringen der Lötvorrichtung an einem Ausleger 40 eines in Figur 3 dargestellen Handhabungsgeräts 41 versehen. Das Endglied 42 des in horizontaler Richtung schwenkbaren Auslegers 40 hat eine in vertikaler Richtung bewegliche Stange 43, an welcher die Lötvorrichtung befestigt ist. Die Bewegungen des Auslegers und der Stange sind den jeweiligen Vorgaben entsprechend in einer programmierbaren Steuerung 44 gespeichert. Diese Steuerung kann auch bestimmte Parameter der Lötvorrichtung erfassen und vorgeben. So kann sie beispielsweise vor Beginn eines Lötzyklus abfragen, ob Lotdraht vorhanden ist oder nicht. Hierzu ist am Schlitten 14 in der Bahn des Lotdrahtes 7 ein elektrischer Signalgeber 45, vorzugsweise eine Lichtschranke, angeordnet. Anhand des von der Lichtschranke gelieferten Signals entscheidet die Steuerung, ob ein Lötzyklus freigegeben wird oder nicht. Ein weiterer, am Träger 6 angeordneter, vorzugsweise optoelektrischer Signalgeber 46 meldet der Steuerung 44, ob sich eine Lötstelle 4, 5 in Lötposition befindet oder nicht. Außerdem kann die Steuerung 44 über den Regelkreis 29 die Aufsetzkraft des Lotdrahtendes 11, sowie die abzuschmelzende Lotdrahtlänge bestimmen und die motorischen Antriebe der Lötvorrichtung sowie deren Meßwertgeber 28 einschalten.

Durch diese Maßnahmen ist eine optimale Anpaßfähigkeit der Lötvorrichtung an Lötstellen mit unterschiedlichem Wärme-Lotmengen- und Aufsetzkraftbedarf durch entsprechende Programmierung der Steuerung 44 gewährleistet. Erwärmungsfehler werden über die Geschwindigkeit des Lotdrahtvorschubs ausgegelichen. Von besonderer Bedeutung ist, daß durch die kraftsensible Regelung des Lotdrahtvorschubs ein Abknicken selbst sehr empfindlicher Lotdrähte zuverlässig vermieden wird.

## Patentansprüche

1. Verfahren zum Regeln der Vorschubgeschwindigkeit eines Lotdrahtes (7) mit automatischer Heranführung einer bestimmten, abzuschmelzenden Lotdrahtlänge bei einer Lötvorrichtung, die einen Schlitten (14) mit einer Lotdrahtvorschubeinrichtung (16, 17, 21) hat, welcher ein Motor (21) zugeordnet ist, der eine bestimmte, abzuschmelzende Lotdrahtlänge an die Lötstelle (4, 5) heranführt und nach erfolgter Lötung den Lotdraht (7) anhält, dadurch gekennzeichnet, daß die momentane Andruckkraft des Lotdrahtendes (11) an die Lötstelle (4, 5) gemessen wird und aus dem gemessenen Wert eine Regelgröße für die Vorschubgeschwindigkeit des Lötdrahtes (7) abgeleitet wird.

2. Verfahren nach Anspruch 1, dadurch gekennzeichnet, daß die Größe der am Lotdrahtende (11) jeweils anstehenden Andruckkraft in proportionale elektrische Signale umgewandelt wird, die als Istwert einem die Drehzahl eines Elektromotors (21) für den Lotdrahtvorschub bestimmenden Regelkreis (29) zugeführt werden.

3. Verfahren nach Anspruch 2, dadurch gekennzeichnet, daß die Gewichtung des von der am Lotdrahtende (11) anstehenden Andruckkraft abgeleiteten elektrischen Signals veränderbar ist.

4. Verfahren nach einem der vorhergehenden Ansprüche, dadurch gekennzeichnet, daß der Gewichtsanteil der die Andruckkraft des Lotdrahtendes (11) mitbestimmenden Teile (8, 9, 13, 14, 16, 17, 21) der Lötvorrichtung vor jedem Lötzyklus durch Nullabgleich eliminiert wird.

5. Verfahren nach einem der vorhergehenden Ansprüche, dadurch gekennzeichnet, daß vom Anstieg der Andruckkraft beim Aufsetzen des Lotdrahtendes (11) auf eine kalte Lötstelle (4, 5) ein Signal zum Start einer Messung der abzuschmelzenden Lotdrahtlänge abgeleitet wird.

6. Verfahren nach Anspruch 5, dadurch gekennzeichnet, daß die Messung der abzuschmelzenden Lotdrahtlänge durch eine vom Anstieg der Andruckkraft des Lotdrahtendes (11) ausgelöste Aufsummierung eines geschwindigkeitsproportionalen Signals der Lotdraht-Vorschubeinrichtung (16, 17, 21) erfolgt.

7. Verfahren nach Anspruch 5 oder 6, dadurch gekennzeichnet, daß die Laufzeit der Lotdraht-Vorschubeinrichtung (16, 17, 21) solange andauert, bis das Ergebnis der Lotmengenmessung einen vorwählbaren Wert erreichert hat.

8. Vorrichtung zur Durchführung des Verfahrens nach einem der vorhergehenden Ansprüche, die einen Schlitten (14) mit einer Lotdraht-Vorschubeinrichtung (16, 17, 21) hat, welcher ein Motor (21) zugeordnet ist, der eine bestimmte, abzuschmelzende Lotdrahtlänge an die Lötstelle (4, 5) heranführt und nach erfolgter Lötung den Lotdraht (7) anhält, und bei welcher der Schlitten (14) in Richtung des Drahtvorschubs an einem Träger (6) verschiebbar geführt ist, dadurch gekennzeichnet, daß zwischen dem Träger (6) und dem Schlitten (14) eine dem Andruck des Lotdrahtendes (11) an der Lötstelle (4, 5) entgegenwirkende Feder (24) angeordnet ist, die den Schlitten (14) in einer vorgegebenen Ausgangslage bezüglich des Trägers (6) zu halten sucht und eine Relativbewegung des Schlittens (14) gegenüber dem Träger (6) zuläßt, und daß dem Schlitten (14) der bewegliche Teil (27) eines am Träger (6) angebrachten, elektrischen Meßwertgebers (28) zugeordnet ist, der ein zur Größe der Relativbewegung des Schlittens (14) gegenüber dem Träger (6) proportionales Signal erzeugt, das als Istwert in den Drehzahlregelkreis (29) des Elektromotors (21) der Lotdrahtvorschubeinrichtung (16, 17, 21) eingegeben wird.

9. Vorrichtung nach Anspruch 8, dadurch gekennzeichnet, daß mittels eines Nullabgleichs die die Andruckkraft des Lotdrahtendes (11) auf die Lötstelle (4, 5) mitbestimmenden Gewichtsanteile eliminierbar sind.

10. Vorrichtung nach Anspruch 8 oder 9, dadurch gekennzeichnet, daß der Lotdrahtvorrat, vorzugsweise ein auf einer drehbaren Spule (8) befindlicher Lotdrahtwickel (9) am bzw. im Schlitten (14) untergebracht ist.

11. Vorrichtung nach einem der Ansprüche 8 bis 10, dadurch gekennzeichnet, daß der Schlitten (14) mit einem induktiven oder als Lichtschranke ausgebildeten elektrischen Signalgeber (45) versehen ist, welcher auf das Vorhandensein bzw. Nichtvorhandensein von Lotdraht (7) in der Lotdrahtführung (10, 15) anspricht.

12. Vorrichtung nach einem der Ansprüche 8 bis 11, dadurch gekennziechnet, daß der Träger (6) des Schlittens (14) in Richtung des Lotdrahtvorschubs zwischen einer Ausgangslage und einer durch einen Anschlag (26) definierten Lötstellung beweglich ist.

13. Vorrichtung nach einem der Anspruche 8 bis 12, dadurch gekennzeichnet, daß der Träger (6) einen auswechselbaren Halter (1) zur Aufnahme einer auf die Lötstelle (4, 5) ausgerichteten Wärmequelle (2) hat.

14. Vorrichtung nach Anspruch 13, dadurch gekennzeichnet, daß der Halter (1) zwischen einer Lötposition und einer Reinigungsposition verstellbar am Träger (6) angeordnet ist.

15. Vorrichtung nach einem der Ansprüche 8 bis 14, dadurch gekennzeichnet, daß der Träger (6) mit einem Adapter (39) zum Anbringen der Lötvorrichtung an einem Werkzeugträger (43) eines eine speicherprogrammierbare Steuerung (44) aufweisenden Handhabungsgeräts (41) versehen ist.

16. Vorrichtung nach Anspruch 15, dadurch gekennzeichnet, daß die Signale der für die Lotdrahtabfrage und gegebenenfalls für eine Abfrage des Vorhandenseins einer Lötstelle (4, 5) vorgesehenen Vorrichtung (45, 46) in die speicherprogrammierbare Steuerung (44) des Handhabungsgeräts (41) eingegeben und dort ausgewertet werden, und daß die Steuerung ferner über die Lotdrahtvorschubeinrichtung (16, 17, 21) die abzuschmelzende Lotdrahtlänge vorgibt sowie den Antrieb (21) der Vorschubeinrichtung und den Regelkreis (29) der Lötvorrichtung aktiviert.

## Claims

1. Method of regulating the rate of feed of a solder wire (7) with automatic feeding of a particular length of solder wire to be melted, in a soldering device provided with a carriage (14) having a solder wire feed device (16, 17, 21), with which is associated a motor (21) which feeds a particular length of solder wire to be melted to the soldering joint (4, 5) and halts the solder wire (7) when the soldering has been completed, characterised in that the instantaneous pressure force of the solder wire end (11) against the soldering joint (4, 5) is measured and from the value measured a controlled variable for the rate of feed of the solder wire (7) is derived.

2. Method according to Claim 1, characterised in that the magnitude of the pressure force occurring at a particular instant at the solder wire end (11) is converted into proportional electrical signals, which are fed as actual value to a control circuit (29) determining the speed of rotation of an electric motor (21) feeding the solder wire.

3. Method according to Claim 2, characterised in that the weighting of the electrical signal derived from the pressure force occurring at the solder wire end (11) is variable.

4. Method according to one of the preceding claims, characterised in that the portion of the weight formed by the parts (8, 9, 13, 14, 16, 17, 21) of the soldering device which participate in determining the pressure force of the solder wire end (11) is eliminated by zero-balancing before each soldering cycle.

5. Method according to one of the preceding claims, characterised in that from the rise of the pressure force when the solder wire end (11) is applied against a cold soldering joint (4, 5) a signal for the start of a measurement of the length of solder wire to be melted is derived.

6. Method according to Claim 5, characterised in that the measurement of the length of solder wire to be melted is effected by summation, triggered by the rise of the pressure force of the solder wire end (11), of a speed-proportional signal of the solder wire feed device (16, 17, 21).

7. Method according to Claim 5 or 6, characterised in that the running time of the solder wire feed device (16, 17, 21) lasts until the result of the measurement amount of solder has reached a preselectable value.

8. Device for applying the method according to one of the preceding claims, which has a carriage (14) having a solder wire feed device (16, 17, 21) with which is associated a motor (21) which feeds a particular length of solder wire to be melted to the soldering joint (4, 5) and, on completion of the soldering, halts the solder wire (7), and in which the carriage (14) is slidably guided an a carrier (6) in the direction in which the wire is fed, characterised in that between the carrier (6) and the carriage (14) a spring (24) is disposed which counteracts the pressure of the solder wire end (11) against the soldering joint (4, 5) and which attempts to hold the carriage (14) in a preset starting position relative to the carrier (6) and permits a relative movement of the carriage (14) in relation to the carrier (6), and in that the movable part (27) of an electric transducer (28) mounted on the carrier (6) is associated with the carriage (14), said transducer producing a signal which is proportional to the length of the relative movement of the carriage (14) in relation to the carrier (6) and which is fed as actual value to the control circuit (29) regulating the speed of rotation of the electric motor (21) of the solder wire feed device (16, 17, 21).

9. Device according to Claim 8, characterised in that the fractions of the weight which participate in determining the pressure force of the solder wire end (11) against the soldering joint (4, 5) can be eliminated by means of zero-balancing.

10. Device according to Claim 8 or 9, characterised in that the stock of solder wire, preferably a coil (9) of solder wire held on a rotatable reel (8), is accommodated on or in the carriage (14).

11. Device according to one of Claims 8 to 10, characterised in that the carriage (14) is provided with an electric signal transmitter (45) of the inductive type or in the form of a light barrier, responding to the presence or absence of solder wire (7) in the solder wire guide (10, 15).

12. Device according to one of Claims 8 to 11, characterised in that the carrier (6) of the carriage (14) is movable, in the direction in which the solder wire is fed, between a starting position and a soldering position defined by a stop (26).

13. Device according to one of Claims 8 to 12, characterised in that the carrier (6) has an exchangeable holder (1) to receive a heat source (2) directed at the soldering joint (4, 5).

14. Device according to Claim 13, characterised in that the holder (1) is disposed on the carrier (6) for adjustment between a soldering position and a cleaning position.

15. Device according to one of Claims 8 to 14, characterised in that the carrier (6) is provided with an adapter (39) for mounting the soldering device on a tool carrier (43) of a manipulator unit (41) provided with a stored program control system (44).

16. Device according to Claim 15, characterised in that the signals of the device (45, 46) provided for detecting the presence of solder wire and optionally the presence of a soldering joint (4, 5) are fed into the stored program control system (44) of the manipulator unit (41) and processed therein, and in that the control system also presets by means of the solder wire feed device (16, 17, 21) the length of solder wire to be melted and also activates the drive (21) of the feed device and the control circuit (29) of the soldering device.

## Revendications

1. Procédé de régulation de la vitesse d'avancement d'un fil de soudure (7) par fourniture automatique d'une longueur déterminée de fil de soudure à faire fondre dans un dispositif de soudage comportant un chariot (14) avec un dispositif d'avancement (16, 17, 21) pour le fil de soudure, dispositif auquel est associé un moteur (21) qui fournit une longueur déterminée de fil de soudure à faire fondre au point de soudure (4, 5) et après le soudage, il retient le fil de soudure (7), procédé caractérisé en ce qu'on mesure la force d'application instantanée de l'extrémité (11) du fil de soudure contre le point de soudage (4, 5) et à partir de la valeur mesurée, on déduit une grandeur de réglage de la vitesse d'avancement du fil de soudure (7).

2. Procédé selon la revendication 1, caractérisé en ce que l'amplitude de la force d'application respective de l'extrémité (11) du fil de soudure est convertie en des signaux électriques proportionnels qui constituent la valeur réelle fournie à un circuit de régulation (29) déterminant la vitesse de rotation d'un moteur électrique (21) pour faire avancer le fil de soudure.

3. Procédé selon la revendication 2, caractérisé en ce que la pondération du signal électrique déduit de la force d'application de l'extrémité (11) du fil de soudure est variable.

4. Procédé selon l'une des revendications précédentes, caractérisé en ce que par tarage sur zéro, avant chaque cycle de soudage, on élimine la composante de poids des parties (8, 9, 13, 14, 16, 17, 21) du dispositif de soudage intégré dans la force d'application de l'extrémité (11) du fil de soudure.

5. Procédé selon l'une des revendications précédentes, caractérisé en ce qu'on déduit un signal pour démarrer la mesure de la longueur de fil de soudure à faire fondre à partir de l'augmentation de la force d'application lors de la mise en place de l'extrémité (11) du fil de soudure sur un point de soudure (4, 5) froid.

6. Procédé selon la revendication 5, caractérisé en ce que la mesure de la longueur du fil de soudure à faire fondre se fait en déclenchant par l'augmentation de la force d'application de l'extrémité (11) du fil de soudure, l'addition d'un signal proportionnel à la vitesse de l'installation d'avancement du fil de soudure (16, 17, 21).

7. Procédé selon la revendication 5 ou 6, caractérisé en ce que le temps de fonctionnement de l'installation d'avancement du fil de soudure (16, 17, 21) dure jusqu'à ce que le résultat de la mesure de la quantité de soudure ait atteint une valeur prédéterminée.

8. Dispositif pour la mise en oeuvre du procédé selon l'une des revendications précédentes comportant un chariot (14) avec un dispositif d'avancement du fil de soudure (16, 17, 21) muni d'un moteur (21) qui fournit une longueur déterminée de fil de soudure à faire fondre, à un point de soudure (4, 5) et après le soudage, retient le fil de soudure (7), le chariot (14) étant guidé coulissant dans la direction de l'avancement du fil sur un support (6), dispositif caractérisé en ce qu'entre le support (6) et le chariot (14) se trouve un ressort (24) opposé à la force d'application de l'extrémité (11) du fil de soudure contre le point de soudure (4, 5), ce ressort ayant tendance à maintenir le chariot (14) dans une position de repos prédéterminée par rapport au support (6) et autorisant un mouvement relatif du chariot (14) par rapport au support (6), la partie mobile (27) d'un capteur de mesure électrique (28) porté par le support (6) étant associée au chariot (14), capteur qui génère un signal proportionnel à l'amplitude du mouvement relatif du chariot (14) par rapport au support (6), ce signal étant fourni comme valeur réelle au circuit de régulation de vitesse de rotation (29) du moteur électrique (21) du dispositif d'avancement du fil de soudure (16, 17, 21).

9. Dispositif selon la revendication 8, caractérisé en ce que par tarage sur zéro, on élimine les composantes de poids intégrées dans la force d'application exercée par l'extrémité (11) du fil de soudure sur le point de soudure (4, 5).

10. Dispositif selon la revendication 8 ou 9, caractérisé en ce que la réserve de fil de soudure est constituée de préférence par un enroulement de fil de soudure (9) porté par une bobine (8) montée à rotation sur ou dans le chariot (14).

11. Dispositif selon l'une des revendications 8 à 10, caractérisé en ce que le chariot (14) est équipé d'un capteur de signal électrique (45) inductif ou en forme de barrière lumineuse qui répond à la présence ou à l'absence du fil de soudure (7) dans le guide (10, 15) pour le fil de soudure.

12. Dispositif selon l'une des revendications 8 à 11, caractérisé en ce que le support (6) du chariot (14) est mobile dans la direction d'avancement du fil de soudure, entre une position de repos et une position de soudage définie par une butée (26).

13. Dispositif selon l'une des revendications 8 à 12, caractérisé en ce que le support (6) possède un support (11) interchangeable pour recevoir une source de chaleur (2) alignée sur le point de soudure (4, 5).

14. Dispositif selon la revendication 13, caractérisé en ce que le support (1) est réglable sur le support (6) entre une position de soudage et une position de nettoyage.

15. Dispositif selon l'une des revendications 8 à 14, caractérisé en ce que le support (6) est muni d'un adaptateur (39) pour monter le dispositif de soudage sur un support d'outil (43) d'un appareil de manoeuvre (41) équipé d'une commande programmable à mémoire (44).

16. Dispositif selon la revendication 15, caractérisé en ce que les signaux du dispositif (45, 46) pour régler le fil de soudure et le cas échéant chercher la présence d'un point de soudure (4, 5) sont introduits dans la commande à programme en mémoire (44) de l'appareil de manoeuvre (41) et en ce que la commande prédétermine en outre la longueur de fil de soudure à faire fondre par l'intermédiaire du dispositif d'avancement de fil de soudure (16, 17, 21) ainsi que la mise en route de l'entraînement (21) du dispositif d'avancement et l'activation du circuit de régulation (29) du dispositif de soudage.
